# EUROPÄISCHE PATENTSCHRIFT

(11) **EP 3 759 810 B1**
(45) Veröffentlichungstag und Bekanntmachung des Hinweises auf die Patenterteilung: **22.06.2022**
(21) Anmeldenummer: 19745976.1
(22) Anmeldetag: 08.07.2019
(51) Int. Cl.: H02P 27/06, H02M 7/5387, H02M 7/493

(54) **FREQUENZUMRICHTER MIT TEMPORÄR FREIGESCHALTETEN RESSOURCEN**
FREQUENCY CONVERTER WITH TEMPORARILY RELEASED RESOURCES
CONVERTISSEUR DE FRÉQUENCE À DES RESSOURCES TEMPORAIREMENT DÉCONNECTÉES

(30) Priorität: 25.07.2018 EP 18185499
(43) Veröffentlichungstag der Anmeldung: 06.01.2021
(73) Patentinhaber: Siemens Aktiengesellschaft, 80333 München (DE)
(72) Erfinder: KRAUSE-LEIPOLDT, Tammo, 91083 Baiersdorf (DE)
(86) Internationale Anmeldenummer: PCT/EP2019/068207
(87) Internationale Veröffentlichungsnummer: WO 2020/020610

(56) Entgegenhaltungen:
- EP-A2- 0 801 836
- DE-A1-102006 059 708
- US-A1- 2010 005 473
- US-A1- 2011 288 992
- US-A1- 2012 232 714
- US-A1- 2013 340 051
- N ET AL: "Dynamic Partial Reconfiguration Contribution on System on Programmable Chip Architecture for Motor Drive Implementation", American Journal of Engineering and Applied Sciences, 31. Januar 2012 (2012-01-31), Seiten 15-24, XP055547564, DOI: 10.3844/ajeassp.2012.15.24 Gefunden im Internet: URL:https://thescipub.com/pdf/10.3844/ajea ssp.2012.15.24 [gefunden am 2019-01-25]
- JOZSEF VASARHELYI ET AL: "Run-Time Reconfiguration of Tandem Inverter for Induction Motor Drives", POWER ELECTRONICS AND MOTION CONTROL CONFERENCE, 2006. EPE-PEMC 2006. 12TH INTERNATIONAL, 31. August 2006 (2006-08-31), Seiten 408-413, XP055547615, Piscataway, NJ, USA DOI: 10.1109/EPEPEMC.2006.4778435 ISBN: 978-1-4244-0121-5

## Beschreibung

### Beschreibung

Frequenzumrichter mit temporär freigeschalteten Ressourcen Frequenzumrichters sind in vielen verschiedenen Ausgestaltungen bekannt. Je nach Frequenzumrichter sind verschiedene Funktionalitäten und Leistungsmerkmale realisierbar. Im Stand der Technik sind die Funktionalitäten und Leistungsmerkmale innerhalb des jeweiligen Frequenzumrichters - genauer: innerhalb von dessen Steuerelektronik - implementiert. Sie können vom Benutzer je nach Bedarf aufgerufen und genutzt werden oder nicht aufgerufen werden und damit ungenutzt bleiben. Eine nachträgliche Erweiterung bzw. allgemein nachträgliche Anpassung der Funktionalitäten und der Leistungsmerkmale je nach momentanem Bedarf des Benutzers ist hingegen nicht möglich. Dies führt in der Praxis dazu, dass der Nutzer eines Frequenzumrichters bereits beim Erwerb des Frequenzumrichters sehr genau wissen muss, welche Funktionalitäten und Leistungsmerkmale er benötigt. Aus diesem Grund existieren oftmals viele verschiedene Frequenzumrichter, die sich in der Hardware gar nicht oder nur geringfügig unterscheiden, beim Hersteller des Frequenzumrichters aber eine enorme Varianz bewirken. Darüber hinaus erschweren sie dem Nutzer oftmals die Auswahl des für ihn geeigneten Frequenzumrichters. Insbesondere steht der Nutzer vor der Entscheidung, ob er beim Erwerb des Frequenzumrichters ein momentan überdimensioniertes Produkt erwirbt, damit ihm bei späteren Änderungen der Anforderungen an den Frequenzumrichter eine Ausbaureserve zur Verfügung steht, oder ob er nur ein Produkt erwirbt, das seinem momentanen Bedarf genügt, so dass er später bei einer Änderung der Anforderungen ein neues Produkt erwerben muss.

Aus der DE 10 2006 059 708 A1 ist ein Betriebsverfahren für einen Frequenzumrichter bekannt. Der Frequenzumrichters kann aus einer Kombination eines Motorsteuergeräts und einer elektrischen Antriebseinheit gebildet sein. Das Motorsteuergerät nimmt jeweils einen Basissollwert für den Betrieb einer über den Frequenzumrichter mit elektrischer Energie versorgten elektrischen Maschine entgegen und ermittelt unter Verwendung des jeweiligen Basissollwertes einen jeweiligen Stromsollwert. Die zugehörige Antriebseinheit ermittelt unter Verwendung des jeweiligen Stromsollwertes jeweilige Steuersignale für Leistungshalbleiter und steuert die Leistungshalbleiter entsprechend der ermittelten jeweiligen Steuersignale an. Dadurch wird die elektrische Maschine derart mit elektrischer Energie versorgt, dass die elektrische Maschine so weit wie möglich entsprechend dem Basissollwert betrieben wird. Die Steuerelektronik ermittelt den jeweiligen Stromsollwert und/oder die jeweiligen Steuersignale gemäß einem Ermittlungsverfahren. Im Rahmen dieses Betriebsverfahrens ist ein sogenannter Überwachungsbetrieb möglich. Im Überwachungsbetrieb prüft die Steuerelektronik, ob eine Istwertbedingung eingehalten wird. Wird die Bedingung eingehalten, werden die Steuersignale an die elektrische Maschine ausgegeben. Anderenfalls wird die elektrische Maschine von der Stromversorgung getrennt. Die Istwertbedingung kann eine dynamische Bedingung sein. Beispielsweise kann die Drehzahl mit einer maximal zulässigen Drehzahl verglichen werden, wobei die maximal zulässige Drehzahl von einem Anfangswert nach und nach auf einen Endwert abgesenkt wird. Der Anfangswert ist diejenige Drehzahl, welche die elektrische Maschine zu dem Zeitpunkt aufweist, zu dem in den Überwachungsbetrieb übergegangen wird. Der Endwert kann den Wert 0 aufweisen.

Aus dem Fachaufsatz "Dynamic Partial Reconfiguration Contribution on System on Programmable Chip Architecture for Motor Drive Implementation" von Hedi Abdelkrim et al., veröffentlicht in American Journal of Engineering and Applied Sciences, volume 5 (1), 2012, Seiten 15 bis 24, ist ein Motorantrieb bekannt, der dynamisch rekonfigurierbar ist.

Aus dem Fachaufsatz "RUN-TIME RECONFIGURATION TANDEM INVERTER USED IN INDUCTION MOTOR DRIVES" von J. Vasarhelyi et al., POWER ELECTRONICS AND MOTION CONTROL CONFERENCE, 2006, Seiten 408 bis 413, ist ein Frequenzumrichter bekannt, der dynamisch rekonfigurierbar ist.

DE 10 2006 059708 offenbart ein Antriebsgerät für zumindest einen elektrischen Motor, das ermittelt anhand einer für den elektrischen Motor bestimmten Folge von Sollwerten und korrespondierenden Istwerten Stromsollwerte für den elektrischen Motor. Die Sollwerte werden dem Antriebsgerät von einer übergeordneten Antriebssteuerung über eine Kommunikationsverbindung zur Verfügung gestellt. Die Antriebssteuerung ermittelt anhand eines Anwendungsprogramms und/ oder anhand von Eingaben eines Anwenders für den ersten elektrischen Motor eine Folge von Sollwerten.

US 2012/232714, US 2011/288992, EP0801836, US2013/340051 und US 2010/005473 offenbaren die weitere Verfahren die dem Benutzer eine nachträgliche Erweiterung bzw. allgemein nachträgliche Anpassung der Funktionalitäten und der Leistungsmerkmale je nach momentanem Bedarf des Benutzers erlauben.

Die Aufgabe der vorliegenden Erfindung besteht darin, Möglichkeiten zu schaffen, mittels derer es möglich ist, jederzeit - auch nachträglich - den Funktionsumfang des Frequenzumrichters nach Bedarf anpassen zu können. In diesem Zusammenhang sollen insbesondere auch die berechtigten Interessen des Herstellers des Frequenzumrichters berücksichtigt werden. Die Aufgabe wird durch ein Betriebsverfahren für eine über einen Frequenzumrichter gespeiste elektrische Maschine mit den Merkmalen des Anspruchs 1 gelöst. Vorteilhafte Ausgestaltungen des Betriebsverfahrens sind Gegenstand der abhängigen Ansprüche 2 bis 14.

Erfindungsgemäß wird ein Betriebsverfahren der eingangs genannten Art dadurch ausgestaltet, dass die Steuerelektronik den jeweiligen Stromsollwert und/oder die jeweiligen Steuersignale nur dann gemäß dem Ermittlungsverfahren ermittelt, wenn und solange ein zulässiger Nutzungsumfang für das Ermittlungsverfahren größer als 0 ist. Sobald der zulässige Nutzungsumfang für das Ermittlungsverfahren auf 0 absinkt, ermittelt die Steuerelektronik hingegen den jeweiligen Stromsollwert und/oder die jeweiligen Steuersignale nicht mehr gemäß dem Ermittlungsverfahren. Weiterhin reduziert die Steuerelektronik zumindest von Zeit zu Zeit den zulässigen Nutzungsumfang für das Ermittlungsverfahren. Der zulässige Nutzungsumfang definiert also, ob das Ermittlungsverfahren genutzt werden kann oder nicht. Aus diesem Grund wird das Ermittlungsverfahren als freigeschaltetes Ermittlungsverfahren bezeichnet.

Dadurch wird es dem Hersteller des Frequenzumrichters ermöglicht, den Frequenzumrichter und insbesondere dessen Steuerelektronik stets einheitlich herzustellen. Unabhängig von der konkreten Ausgestaltung des freigeschalteten Ermittlungsverfahrens stellt der Frequenzumrichter also von seiner Hardware her gesehen alle Voraussetzungen bereit, um das freigeschaltete Ermittlungsverfahren ausführen zu können. Der Notwendigkeit, die wirtschaftlichen Interessen auch des Herstellers zu berücksichtigen, wird dadurch Genüge getan, dass der Hersteller bestimmte Funktionalitäten und Leistungsmerkmale - und damit im Ergebnis das Ermittlungsverfahren, gemäß dem die Steuerelektronik den jeweiligen Stromsollwert und die jeweiligen Steuersignale ermittelt - nur in begrenztem Umfang (und gegen Gebühr) freischaltet, so dass insbesondere die Entwicklungsleistung und das Know-how, welches in den Funktionalitäten und Leistungsmerkmalen realisiert ist, honoriert werden. Dem Betreiber des Frequenzumrichters wird die Möglichkeit an die Hand gegeben, sich quasi ein individuelles Produkt speziell für seine Bedürfnisse maßzuschneidern und es darüber hinaus auch individuell an sich ändernde Anforderungen anzupassen.

Der zulässige Nutzungsumfang ist unabhängig vom aktuellen Betriebszustand des Frequenzumrichters und der elektrischen Maschine. Damit ist auch die Prüfung, ob der zulässige Nutzungsumfang den Wert 0 aufweist oder nicht, - mit Ausnahme des Wertes des zulässigen Nutzungsumfangs als solchem - unabhängig vom aktuellen Betriebszustand des Frequenzumrichters und der elektrischen Maschine.

Der zulässige Nutzungsumfang kann in prinzipiell beliebigen Einheiten festgelegt sein. Entscheidend ist ausschließlich, dass der Nutzungsumfang quantifiziert ist, so dass er nach und nach reduziert werden kann. Weiterhin korrespondiert der zulässige Nutzungsumfang mit einer zulässigen Nutzungsdauer. Die zulässige Nutzungsdauer kann nutzungsunabhängig sein. Beispielsweise kann es sich bei dem zulässigen Nutzungsumfang um eine nutzungsunabhängige Zeitspanne handeln, beispielsweise um eine Anzahl von Tagen oder Wochen. Alternativ kann es sich um eine nutzungsabhängige Nutzungsdauer handeln. Beispielsweise kann es sich bei dem zulässigen Nutzungsumfang um eine Anzahl von Betriebsstunden handeln, also eine nutzungsabhängige Zeitspanne. Ebenso kann es sich um eine Anzahl von Lastzyklen oder Taktzyklen handeln. Im Falle einer nutzungsabhängigen Nutzungsdauer kann weiterhin das Reduzieren der zulässigen Nutzungsdauer alternativ vom Betriebszustand des Frequenzumrichters und/oder der elektrischen Maschine abhängig oder unabhängig sein. Beispielsweise kann jede Betriebsstunde gleich gewichtet werden. In diesem Fall wäre das Reduzieren der zulässigen Nutzungsdauer nicht vom Betriebszustand des Frequenzumrichters und/oder der elektrischen Maschine abhängig. Alternativ können die Betriebsstunden (oder entsprechend kleinere Einheiten) beispielsweise mit einer Leistung gewichtet werden, die vom Umrichter der elektrischen Maschine zugeführt wird. In diesem Fall wäre das Reduzieren der zulässigen Nutzungsdauer vom Betriebszustand des Frequenzumrichters und/oder der elektrischen Maschine abhängig.

Es ist möglich, dass die Steuerelektronik immer dann, wenn der zulässige Nutzungsumfang einen unteren Grenzwert oberhalb von 0 erreicht, einen entsprechenden Hinweis ausgibt. Dadurch steht dem Betreiber des Frequenzumrichters die Möglichkeit zur Verfügung, rechtzeitig vor Erreichen eines zulässigen Nutzungsumfangs von 0 den zulässigen Nutzungsumfang aufzustocken. Somit wird das Interesse des Betreibers des Frequenzumrichters gewahrt, dass er den Frequenzumrichter jederzeit betreiben kann.

Unter Umständen ist es sogar möglich, die Steuerelektronik derart zu parametrieren, dass sie eine derartige Anforderung einer Aufstockung des zulässigen Nutzungsumfangs selbsttätig vornimmt. In diesem Fall ist das Betriebsverfahren derart ausgestaltet, dass die Steuerelektronik immer dann, wenn der zulässige Nutzungsumfang den unteren Grenzwert erreicht, prüft, ob sie zu einem eigenständigen Abrufen einer Erweiterung des zulässigen Nutzungsumfangs berechtigt ist. Bejahendenfalls ruft die Steuerelektronik die Erweiterung des zulässigen Nutzungsumfangs über eine Rechner-Rechner-Verbindung von einem Server ab. Verneinendenfalls gibt sie einen entsprechenden Hinweis aus.

Durch die genannten Vorgehensweisen ist - zumindest im Regelfall - gewährleistet, dass der zulässige Nutzungsumfang nicht auf 0 absinkt. Wenn dies doch der Fall ist, sind verschiedene Möglichkeiten gegeben.

Zum einen ist es möglich, dass die Steuerelektronik immer dann, wenn der zulässige Nutzungsumfang für das freigeschaltete Ermittlungsverfahren auf 0 absinkt, den jeweiligen Stromsollwert und die jeweiligen Steuersignale überhaupt nicht mehr ermittelt. Der Frequenzumrichter geht also sozusagen außer Betrieb. Zum anderen ist es möglich, dass die Steuerelektronik immer dann, wenn der zulässige Nutzungsumfang für das freigeschaltete Ermittlungsverfahren auf 0 absinkt, zwar weiterhin den jeweiligen Stromsollwert und die jeweiligen Steuersignale ermittelt, den jeweiligen Stromsollwert und/oder die jeweiligen Steuersignale jedoch gemäß einem von dem freigeschalteten Ermittlungsverfahren verschiedenen Basisverfahren ermittelt. Der Frequenzumrichter geht also sozusagen in eine Art Basisbetrieb über.

Das Basisverfahren unterscheidet sich von dem freigeschalteten Ermittlungsverfahren durch mindestens eine der folgenden Eigenschaften:
- Eine Taktzeit, mit welcher das Basisverfahren ausgeführt wird, ist größer als eine Taktzeit, mit welcher das freigeschaltete Ermittlungsverfahren ausgeführt wird. Beispielsweise kann das Basisverfahren mit einer Taktzeit von 500 µs arbeiten, während das freigeschaltete Ermittlungsverfahren mit einer Taktzeit von 125 µs arbeitet.
- Die Steuerelektronik nimmt im Rahmen des freigeschalteten Ermittlungsverfahrens zusätzlich zum jeweiligen Basissollwert auch jeweils einen Basisistwert entgegen und berücksichtigt ihn bei der Ermittlung des jeweiligen Stromsollwertes, nimmt den jeweiligen Basisistwert im Rahmen des Basisverfahrens jedoch nicht entgegen oder berücksichtigt ihn im Rahmen des Basisverfahrens nicht bei der Ermittlung des jeweiligen Stromsollwertes. Es erfolgt also im einen Fall eine Regelung, im anderen Fall nur eine Steuerung.
- Eine Sprungantwort, mit welcher die Steuerelektronik bei der Ermittlung der Stromsollwerte auf eine Änderung von Basissollwert zu Basissollwert reagiert, ist bei dem Basisverfahren anders als bei dem freigeschalteten Ermittlungsverfahren. Derartige Änderungen können beispielsweise im Falle einer Regelung durch die Art des Reglers (P-Regler, PI-Regler, PT1-Regler usw.) und dessen Parametrierung (beispielsweise bei einem PI-Regler Proportionalverstärkung und Nachstellzeit) bewirkt sein.
- Die Art des Basissollwertes ist im Rahmen des Basisverfahrens eine andere als im Rahmen des freigeschalteten Ermittlungsverfahrens. Beispielsweise kann im Rahmen des Basisverfahrens stets eine Lageregelung erfolgen, d.h. der Basissollwert ein Lagesollwert sein, während im Rahmen des freigeschalteten Ermittlungsverfahrens parametriert werden kann, ob der Basissollwert ein Lagesollwert, ein Drehzahlsollwert oder ein Momentsollwert ist.
- In vielen Fällen wird von dem Frequenzumrichter bei der Ermittlung der jeweiligen Steuersignale eine Lage einer beweglichen Komponente der elektrischen Maschine berücksichtigt, beispielsweise die Drehstellung des Rotors einer rotatorischen elektrischen Maschine. Es ist möglich, dass bei der Ermittlung der Steuersignale gemäß dem freigeschalteten Ermittlungsverfahren die Lage mittels eines Lagegebers erfasst und an die Steuerelektronik übermittelt wird, während sie beim Basisverfahren von der Steuerelektronik geberlos ermittelt wird.
- In vielen Fällen berücksichtigt die Steuerelektronik bei der Ermittlung des jeweiligen Stromsollwertes und/oder der Ermittlung der jeweiligen Steuersignale Sensorsignale aus der Umgebung des Frequenzumrichters und/oder aus der Umgebung der elektrischen Maschine. Dadurch kann die Steuerelektronik beispielsweise auf eine thermische Überlastung reagieren. Es ist möglich, dass die Steuerelektronik die Sensorsignale im Rahmen des Basisverfahrens auf andere Weise berücksichtigt als im Rahmen des freigeschalteten Ermittlungsverfahrens. Normalerweise (= Basisverfahren) wird die Steuerelektronik den Frequenzumrichter derart betreiben, dass die Hardwarekomponenten des Frequenzumrichters - insbesondere die Leistungshalbleiter - vor einer thermischen Überlastung geschützt werden. In manchen Anwendungsfällen - beispielsweise wenn die elektrische Maschine einen Lüfter betreibt, mittels dessen ein Tunnel für Kraftfahrzeuge oder Schienenfahrzeuge belüftet wird - muss aus übergeordneten Sicherheitsgründen jedoch der Frequenzumrichter "bis zum bitteren Ende" weiter betrieben werden können, obwohl er thermisch überlastet wird (= freigeschaltetes Ermittlungsverfahren). Denn es ist wichtiger, beispielsweise im Falle eines Brandes so lange wie möglich Rauch aus dem Tunnel abzuziehen und damit möglicherweise Menschenleben zu retten, als den Frequenzumrichter funktionsfähig zu erhalten.
- Die Steuerelektronik ermittelt den jeweiligen Stromsollwert und/oder die jeweiligen Steuersignale im Rahmen des Basisverfahrens und des freigeschalteten Ermittlungsverfahrens derart, dass eine der elektrischen Maschine zugeführte Leistung im Rahmen des Basisverfahrens auf einen niedrigeren Wert begrenzt wird als im Rahmen des freigeschalteten Ermittlungsverfahrens. Mit anderen Worten: Ohne Freischaltung des Ermittlungsverfahrens kann der Frequenzumrichter nur mit einer Leistung von x kW betrieben werden, während er mit Freischaltung des Ermittlungsverfahrens mit y kW betrieben werden kann, wobei y größer als x ist.

Es ist möglich, dass mittels eines jeweiligen Freischaltcodes nur einzelne Eigenschaften des Ermittlungsverfahrens freigeschaltet werden. Vorzugsweise sind jedoch Eigenschaften des Ermittlungsverfahrens zu vorkonfektionierten Gruppen zusammengefasst, die mittels eines einheitlichen Freischaltcodes freigeschaltet werden.

Der Freischaltcode kann der Steuereinrichtung auf prinzipiell beliebige Art und Weise übermittelt werden. Insbesondere ist es möglich, den Freischaltcode in einer App zu übermitteln. Auch ist es möglich, die vorkonfektionierten Gruppen mittels einer App zu definieren, so dass der Benutzer durch direktes Anwählen der App oder Auswählen innerhalb der App die jeweilige Gruppe festlegen kann.

Es ist möglich, dass für die Ausführung des freigeschalteten Ermittlungsverfahrens erforderliche Algorithmen und/oder Parameter in der Steuerelektronik permanent gespeichert sind. In diesem Fall erfolgt die Freischaltung des Ermittlungsverfahrens durch das Entgegennehmen eines Freischaltcodes durch die Steuerelektronik. Diese Ausgestaltung weist den Vorteil auf, dass nur in geringem Umfang Daten zur Steuerelektronik übertragen werden müssen. Es ist sogar möglich, dass die Daten manuell über ein Bedienfeld eingegeben werden. Alternativ ist es möglich, dass die Freischaltung des Ermittlungsverfahrens dadurch erfolgt, dass die Steuerelektronik die für die Ausführung des freigeschalteten Ermittlungsverfahrens erforderlichen Algorithmen und/oder Parameter zusammen mit einem Freischaltcode entgegennimmt. In diesem Fall ist zwar in größerem Umfang ein Datenverkehr erforderlich. Im Gegenzug weist diese Ausgestaltung jedoch den Vorteil auf, dass auf Seiten der Steuerelektronik ein geringerer Speicherbedarf besteht. Weiterhin liefern die Algorithmen und Parameter nur während des Zeitraums, während dessen sie in der Steuerelektronik gespeichert sind, einen Angriffspunkt für Hacker. Bei einer permanenten Speicherung in der Steuerelektronik ist dieser Angriffspunkt hingegen permanent gegeben.

Im Falle eines Ladens auch der Algorithmen und/oder Parameter ist es insbesondere möglich, dass diese beispielsweise über einen Cloudrechner geladen werden.

Die Aufgabe wird weiterhin durch ein Steuerprogramm mit den Merkmalen des Anspruchs 12 gelöst. Erfindungsgemäß bewirkt die Abarbeitung des Maschinencodes durch die Steuerelektronik, dass die Steuerelektronik ein erfindungsgemäßes Betriebsverfahren ausführt.

Die Aufgabe wird weiterhin durch eine Steuerelektronik eines Frequenzumrichters mit den Merkmalen von Anspruch 13 gelöst. Erfindungsgemäß ist die Steuerelektronik mit einem erfindungsgemäßen Steuerprogramm programmiert, so dass die Abarbeitung des Maschinencodes durch die Steuerelektronik bewirkt, dass die Steuerelektronik ein erfindungsgemäßes Betriebsverfahren ausführt.

Die Aufgabe wird weiterhin durch einen Frequenzumrichter mit den Merkmalen des Anspruchs 14 gelöst. Erfindungsgemäß ist die Steuerelektronik, welche die Halbleiterschalter ansteuert, als erfindungsgemäße Steuerelektronik ausgebildet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Maschine,
- FIG 2: einen Antrieb und
- FIG 3 bis 7: Ablaufdiagramme.

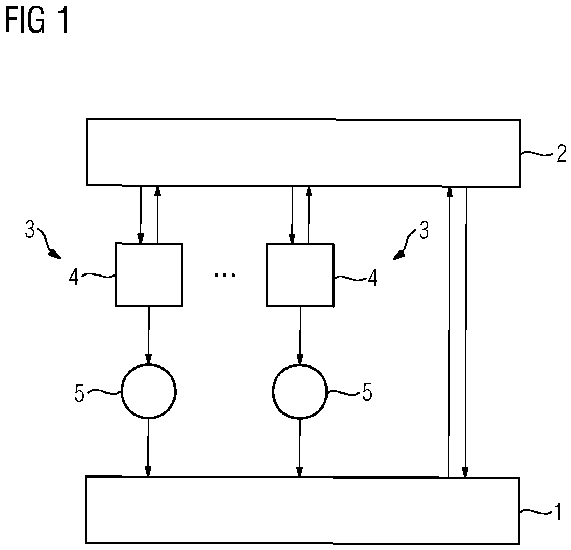

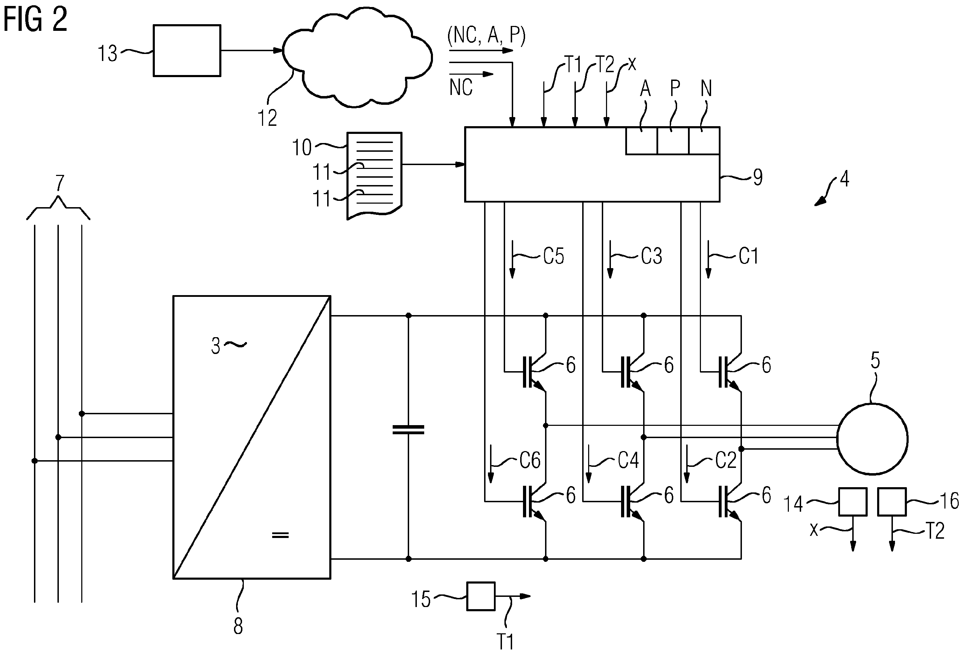

Gemäß FIG 1 wird eine industrielle technische Anlage 1 von einer Steuereinrichtung 2 gesteuert. Bei der Steuereinrichtung 2 kann es sich - je nach Anlage 1 und je nach zu realisierender Steuerungsaufgabe - beispielsweise um eine numerische Steuerung (CNC = computer numeric control), eine Bewegungssteuerung (MC = motion control) oder um eine speicherprogrammierbare Steuerung (= SPS, im englischen oftmals als PLC = programmable logic control bezeichnet) handeln. Von der Steuereinrichtung 2 werden in der Regel unter anderem mehrere Antriebe 3 gesteuert. Die Antriebe 3 umfassen jeweils einen Frequenzumrichter 4 und eine elektrische Maschine 5. Nachfolgend wird - stellvertretend für alle Frequenzumrichter 4 - zunächst in Verbindung mit FIG 2 der Aufbau eines der Frequenzumrichter 4 und sodann in Verbindung mit den weiteren FIG die Betriebsweise des Frequenzumrichters 4 näher erläutert.

Gemäß FIG 2 weist der Frequenzumrichter 4 Leistungshalbleiter 6 auf. Die Leistungshalbleiter 6 können beispielsweise entsprechend der Darstellung in FIG 2 als IGBTs ausgebildet sein. Auch eine Ausgestaltung als MOSFETs oder als Thyristoren - insbesondere als GTOs - ist möglich. In FIG 2 sind nur die Leistungshalbleiter 6 selbst dargestellt. In der Regel sind den Leistungshalbleitern 6 zusätzlich Freilaufdioden parallel gegen geschaltet. Die Freilaufdioden sind nicht mit dargestellt.

Über die Leistungshalbleiter 6 wird die entsprechende elektrische Maschine 5 mit elektrischer Energie versorgt. Insbesondere wird die elektrische Energie in der Regel aus einem Versorgungsnetz 7 bezogen, wobei die elektrische Energie vor dem Zuführen zu den Leistungshalbleitern 6 mittels eines Gleichrichters 8 gleichgerichtet wird. Der Gleichrichter 8 kann - je nach Lage des Einzelfalls - als rückspeisefähiger Umrichter oder als einfacher Diodengleichrichter ausgebildet sein.

Zur Steuerung der jeweiligen Leistungshalbleiter 6 und damit des jeweiligen Antriebs 3 weist der Frequenzumrichter 4 eine Steuerelektronik 9 auf. Die Steuerelektronik 9 steuert also die Leistungshalbleiter 6 an. Insbesondere führt die Steuerelektronik 9 den Leistungshalbleitern 6 entsprechende Steuersignale C1 bis C6 zu. Die Steuerelektronik 9 ist mit einem Steuerprogramm 10 programmiert. Das Steuerprogramm 10 umfasst Maschinencode 11, der von der Steuerelektronik 9 abarbeitbar ist. Die Abarbeitung des Maschinencodes 11 durch die Steuerelektronik 9 bewirkt, dass die Steuerelektronik 9 den Frequenzumrichter 4 gemäß einem Betriebsverfahren betreibt, das nachstehend in Verbindung mit den weiteren FIG näher erläutert wird.

Im Rahmen des erfindungsgemäßen Betriebsverfahrens setzt die Steuerelektronik 9 zunächst in einem Schritt S1 einen zulässigen Nutzungsumfang N auf einen Anfangswert N0. Der Anfangswert N0 ist größer als 0. Der zulässige Nutzungsumfang N kann beispielsweise als benutzungunabhängige Zeitdauer, als Anzahl von Betriebsstunden, als Anzahl von Lastzyklen und anderes mehr vorgegeben sein.

In einem Schritt S2 prüft die Steuerelektronik 9, ob der zulässige Nutzungsumfang N einen Wert größer als 0 aufweist. Wenn dies der Fall ist, geht die Steuerelektronik 9 zu einem Schritt S3 über. Im Schritt S3 nimmt die Steuerelektronik 9 einen Basissollwert B* entgegen. Der Basissollwert B* beschreibt einen Soll-Betriebszustand der elektrischen Maschine 5, beispielsweise bei einer üblichen rotatorischen elektrischen Maschine deren Lage, deren Drehzahl oder deren Moment. Bei einem Linearantrieb wären gegebenenfalls die Drehzahl und/oder das Moment durch die Geschwindigkeit und/oder die Kraft zu ersetzen.

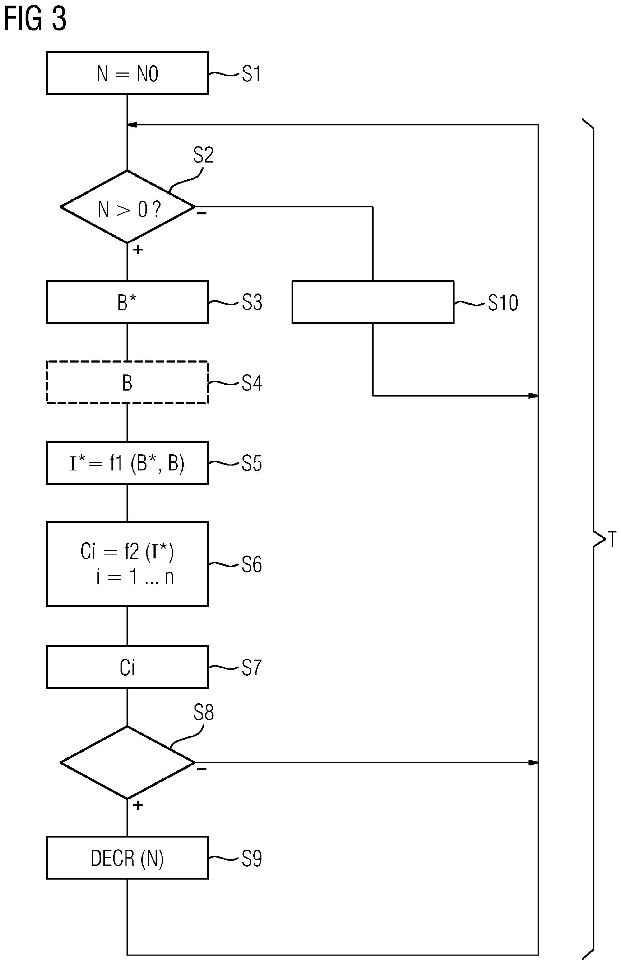

In einem Schritt S4 kann die Steuerelektronik 9 weiterhin einen zugehörigen Basisistwert B der elektrischen Maschine 5 entgegennehmen, der den zugehörigen Ist-Betriebszustand der elektrischen Maschine 5 charakterisiert. Der Schritt S4 ist jedoch nur optional und daher in FIG 3 nur gestrichelt eingezeichnet.

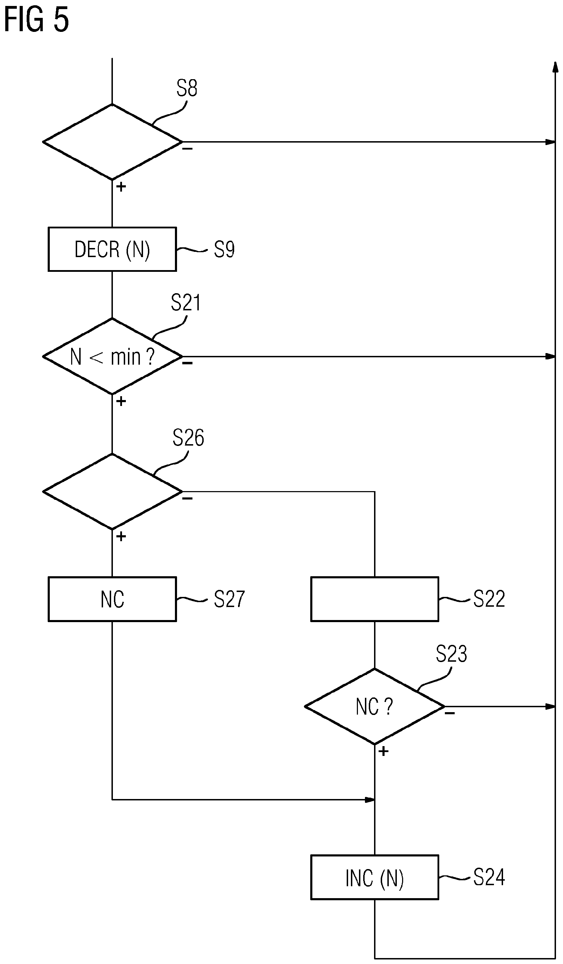

In einem Schritt S5 ermittelt die Steuerelektronik 9 einen Stromsollwert I* für die elektrische Maschine 5. Die Ermittlung erfolgt entsprechend der Darstellung in FIG 5 unter Verwendung des Basissollwertes B*. Falls auch der Basisistwert B zur Verfügung steht, wird in der Regel auch der Basisistwert B mit verwendet. Die Ermittlung des Schrittes S5 erfolgt gemäß einem ersten Teil f1 eines Ermittlungsverfahrens. Sodann ermittelt die Steuerelektronik 9 in einem Schritt S6 die Steuersignale C1 bis C6 für die Leistungshalbleiter 6. Die Ermittlung erfolgt entsprechend der Darstellung in FIG 3 unter Verwendung des Stromsollwertes I*. Die Ermittlung des Schrittes S6 erfolgt weiterhin gemäß einem zweiten Teil f2 des Ermittlungsverfahrens. Sowohl die Ermittlung des Stromsollwertes I* als auch die darauf aufbauende Ermittlung der Steuersignale C1 bis C6 erfolgen derart, dass die elektrische Maschine 5 so weit wie möglich entsprechend dem Basissollwert B* betrieben wird. In einem Schritt S7 steuert die Steuerelektronik 9 sodann die Leistungshalbleiter 6 entsprechend der ermittelten jeweiligen Steuersignale C1 bis C6 an. Dadurch wird die elektrische Maschine 5 entsprechend mit elektrischer Energie versorgt.

In einem Schritt S8 prüft die Steuerelektronik 9, ob eine Bedingung zum Verringern des zulässigen Nutzungsumfangs N erfüllt ist. Wenn dies der Fall ist, reduziert die Steuerelektronik 9 in einem Schritt S9 den zulässigen Nutzungsumfang N. Anderenfalls wird der Schritt S9 übersprungen. In beiden Fällen geht die Steuerelektronik 9 sodann zum Schritt S2 zurück.

Die Schritte S2 bis S9 werden von der Steuerelektronik 9 entsprechend der Darstellung in FIG 3 mit einer Taktzeit T wiederholt ausgeführt. Die Taktzeit T weist einen Wert auf, der im einstelligen Millisekundenbereich oder darunter liegt, beispielsweise bei 2 ms, 1 ms, 500 µs, 250 µs oder 125 µs.

Durch die oben stehend erläuterte Vorgehensweise wird also gewährleistet, dass die Steuerelektronik 9 den jeweiligen Stromsollwert I* und die jeweiligen Steuersignale C1 bis C6 gemäß dem durch die Teile f1 und f2 definierten Ermittlungsverfahren ermittelt, wenn und solange der zulässige Nutzungsumfang N größer als 0 ist. Sobald der zulässige Nutzungsumfang N auf 0 absinkt, wird das durch die Teile f1 und f2 definierte Ermittlungsverfahren hingegen nicht mehr ausgeführt. In diesem Fall stellt also die Steuerelektronik 9 die Ermittlung des Stromsollwertes I* und der Steuersignale C1 bis C6 gemäß dem durch die Teile f1 und f2 definierten Ermittlungsverfahren ein. Die Steuerelektronik 9 ermittelt also in diesem Fall den Stromsollwert I* und die Steuersignale C1 bis C6 nicht mehr gemäß dem durch die Teile f1 und f2 definierten Ermittlungsverfahren. Stattdessen führt die Steuerelektronik 9 einen Schritt S10 aus, in dem sie eine andere Maßnahme ergreift. Die Ermittlung gemäß dem durch die Teile f1 und f2 definierten Ermittlungsverfahren ist also nur so lange freigeschaltet, wie der zulässige Nutzungsumfang N größer als 0 ist.

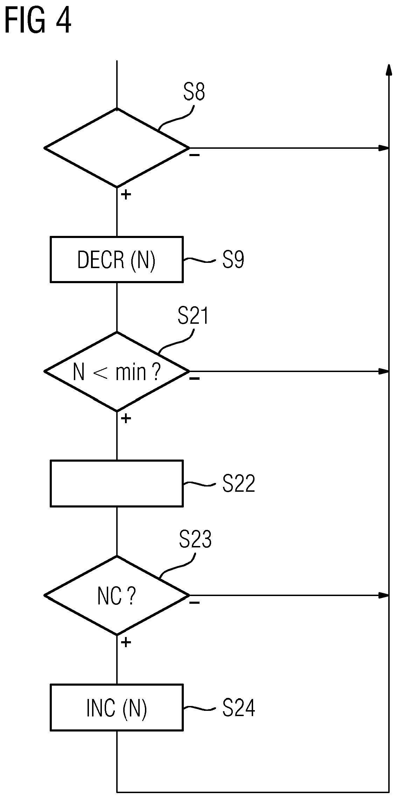

Um zu vermeiden, dass der zulässige Nutzungsumfang N bis auf 0 absinkt, sind verschiedene Ausgestaltungen möglich. Insbesondere ist es möglich, das Verfahren von FIG 3 alternativ entsprechend der Vorgehensweise von FIG 4 oder entsprechend der Vorgehensweise von FIG 5 zu ergänzen.

Im Rahmen der Vorgehensweise von FIG 4 schließt sich an den Schritt S9 ein Schritt S21 an. Im Schritt S21 prüft die Steuerelektronik 9, ob der zulässige Nutzungsumfang N einen unteren Grenzwert min erreicht. Der untere Grenzwert min weist einen Wert oberhalb von 0 auf. Solange der zulässige Nutzungsumfang N oberhalb des unteren Grenzwertes min bleibt, geht die Steuerelektronik 9 vom Schritt S21 wieder zum Schritt S2 zurück. Anderenfalls gibt die Steuerelektronik 9 in einem Schritt S22 einen Hinweis aus. Der Hinweis kann beispielsweise über eine Mensch-Maschine-Schnittstelle an einen Benutzer der Anlage 1, an eine übergeordnete Steuereinrichtung - beispielsweise die Steuereinrichtung 2 - oder allgemein an einen anderen Rechner übermittelt werden. Aufgrund des Hinweises ist es daher möglich, beispielsweise durch Vorgabe eines entsprechenden Freischaltcodes NC den zulässigen Nutzungsumfang N zu erhöhen. Die Steuerelektronik 9 prüft daher in einem Schritt S23, ob ihr ein derartiger Freischaltcode NC vorgegeben wird. Wenn dies der Fall ist, erhöht die Steuerelektronik 9 in einem Schritt S24 den zulässigen Nutzungsumfang N entsprechend.

Im Rahmen der Vorgehensweise von FIG 5 sind ebenfalls die Schritte S21 bis S24 vorhanden. Zusätzlich sind jedoch Schritte S26 und S27 vorhanden. Im Schritt S26 prüft die Steuerelektronik 9, ob sie zu einem eigenständigen Abrufen einer Erweiterung des zulässigen Nutzungsumfangs N berechtigt ist. Wenn dies der Fall ist, ruft die Steuerelektronik 9 im Schritt S27 - siehe auch FIG 2 - die Erweiterung des zulässigen Nutzungsumfangs N über eine Rechner-Rechner-Verbindung 12 von einem Server 13 ab. Insbesondere kann sie eigenständig den Freischaltcode NC anfordern. Anderenfalls, wenn die Steuerelektronik 9 also nicht zu einem eigenständigen Abrufen einer Erweiterung des zulässigen Nutzungsumfangs N berechtigt ist, geht die Steuerelektronik 9 zum Schritt S22 und von dort zu den Schritten S23 und S24 über.

Für die Ausgestaltung des Schrittes S10 gibt es ebenfalls verschiedene Möglichkeiten.

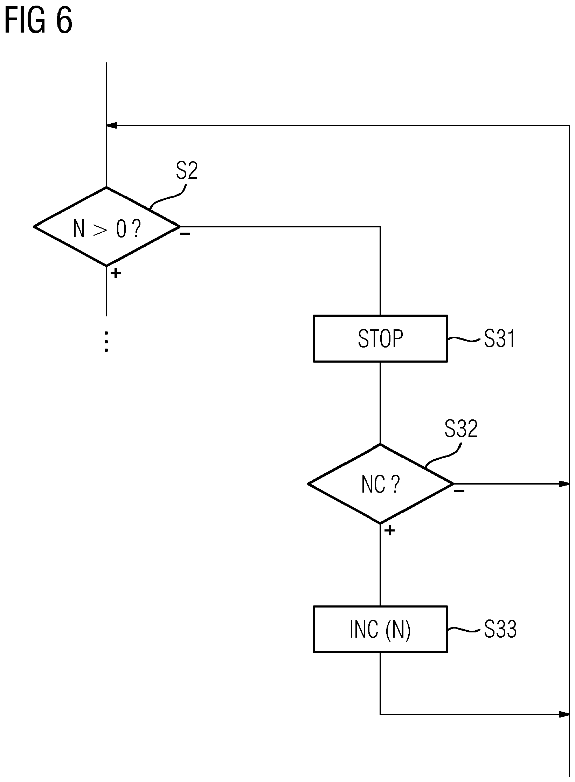

Beispielsweise ist es entsprechend der Darstellung in FIG 6 möglich, dass der Schritt S10 durch Schritte S31 bis S33 implementiert ist. Im Schritt S31 stellt die Steuerelektronik 9 die Ermittlung des jeweiligen Stromsollwertes I* und der jeweiligen Steuersignale C1 bis C6 vollständig ein. Sie ermittelt also den jeweiligen Stromsollwert I* und die jeweiligen Steuersignale C1 bis C6 überhaupt nicht mehr. Sodann wartet sie im Schritt S32 ab, dass ihr der Freischaltcode NC vorgegeben wird. Wenn dies der Fall ist, erhöht die Steuerelektronik 9 in einem Schritt S33 den zulässigen Nutzungsumfang N entsprechend. Die Schritte S32 und S33 korrespondieren inhaltlich also mit den Schritten S23 und S24 der FIG 4 und 5.

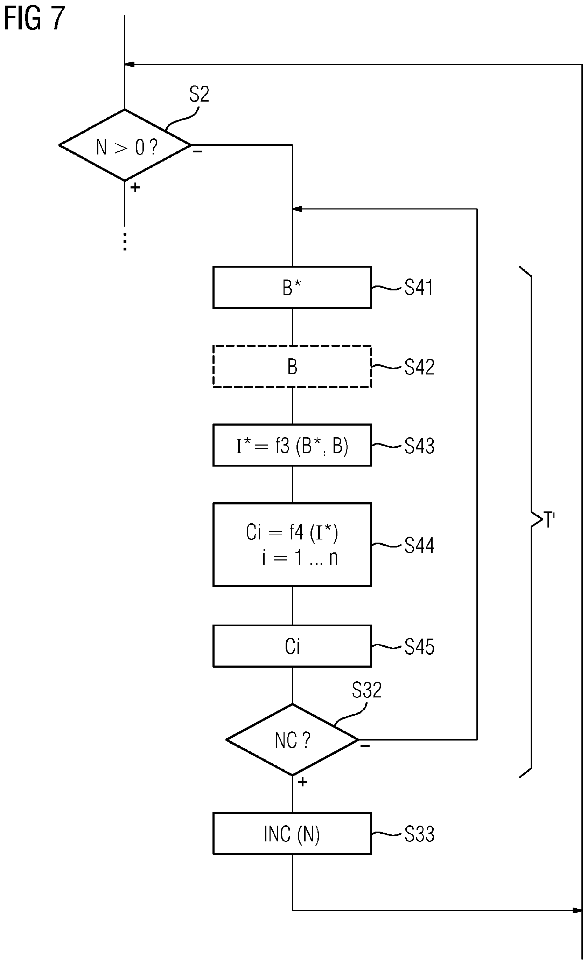

Alternativ ist es entsprechend der Darstellung in FIG 7 möglich, dass anstelle des Schrittes S31 Schritte S41 bis S45 vorhanden sind.

Im Schritt S41 nimmt die Steuerelektronik 9 den Basissollwert B* entgegen. Im Schritt S42 kann die Steuerelektronik 9 weiterhin einen zugehörigen Basisistwert B der elektrischen Maschine 5 entgegennehmen. Der Schritt S42 ist jedoch nur optional und daher in FIG 7 nur gestrichelt eingezeichnet. Im Schritt S43 ermittelt die Steuerelektronik 9 den Stromsollwert I* für die elektrische Maschine 5. Im Schritt S44 ermittelt die Steuerelektronik 9 die Steuersignale C1 bis C6 für die Leistungshalbleiter 6. Im Schritt S45 steuert die Steuerelektronik sodann die Leistungshalbleiter 6 entsprechend der ermittelten jeweiligen Steuersignale C1 bis C6 an.

Die Schritte S41 bis S45 korrespondieren also vom Ansatz her mit den Schritten S3 bis S7 von FIG 3. Der Schritt S43 unterscheidet sich vom Schritt S5 jedoch dadurch, dass im Rahmen des Schrittes S43 die Ermittlung des Stromsollwertes I* nicht gemäß dem ersten Teil f1 des Ermittlungsverfahrens erfolgt, sondern gemäß einem ersten Teil f3 eines Basisverfahrens. Alternativ oder zusätzlich unterscheidet sich der Schritt S44 vom Schritt S6 dadurch, dass im Rahmen des Schrittes S44 die Ermittlung der Steuersignale C1 bis C6 nicht gemäß dem zweiten Teil f2 des Ermittlungsverfahrens erfolgt, sondern gemäß einem zweiten Teil f4 des Basisverfahrens.

Das Basisverfahren der Schritte S43 und S44 ist ein anderes Verfahren als das Ermittlungsverfahren der Schritte S5 und S6. Es wird also zwar ein Stromsollwert I* ermittelt, und es werden auch die Steuersignale C1 bis C6 ermittelt. Der Stromsollwert I* des Schrittes S43 hat jedoch - bei gleichen Eingangsgrößen - einen anderen Wert als der Stromsollwert I* des Schrittes S5. Alternativ oder zusätzlich haben die Steuersignale C1 bis C6 des Schrittes S44 - bei gleichen Eingangsgrößen - andere Werte als die Steuersignale C1 bis C6 des Schrittes S6.

Das Basisverfahren der Schritte S43 und S44 kann sich von dem Ermittlungsverfahren S5 und S6 durch verschiedene Eigenschaften unterscheiden.

Beispielsweise ist es möglich, dass eine Taktzeit T', mit welcher das Basisverfahren ausgeführt wird, größer als die Taktzeit T ist, mit welcher das Ermittlungsverfahren ausgeführt wird. Beispielsweise kann die Taktzeit T' gleich dem Doppelten oder dem Vierfachen der Taktzeit T sein. Wenn - rein beispielhaft - die Taktzeit T 1 ms beträgt, könnte die Taktzeit T' also beispielsweise 2 ms oder 4 ms betragen.

Alternativ oder zusätzlich ist es möglich, dass die Steuerelektronik 9 im Rahmen des Ermittlungsverfahrens zusätzlich zum Basissollwert B* auch den Basisistwert B entgegennimmt und bei der Ermittlung des jeweiligen Stromsollwertes I* berücksichtigt, während die Steuerelektronik 9 im Rahmen des Basisverfahrens den Basisistwert B nicht entgegennimmt oder bei der Ermittlung des jeweiligen Stromsollwertes I* nicht berücksichtigt. Es kann also beispielsweise so sein, dass zwar der Schritt S4 vorhanden ist, nicht aber der Schritt S42.

Alternativ oder zusätzlich ist es möglich, dass eine Sprungantwort, mit welcher die Steuerelektronik 9 bei der Ermittlung der Stromsollwerte I* auf eine Änderung von Basissollwert B* zu Basissollwert B* reagiert, bei dem Basisverfahren anders ist als bei dem Ermittlungsverfahren. Beispielsweise kann im Rahmen des Schrittes S5 der erste Teil f1 des Ermittlungsverfahrens eine bestimmte Art von Regler (beispielsweise einen PI-Regler) realisieren, während im Rahmen des Schrittes S43 der erste Teil f3 des Basisverfahrens eine andere Art von Regler (beispielsweise einen P-Regler) realisiert. Auch können sich - sogar bei gleicher Art von Regler - die Reglercharakteristiken unterscheiden, beispielsweise bei einem PI-Regler die Proportionalverstärkungen und/oder die Nachstellzeiten im Rahmen des Ermittlungsverfahrens und des Basisverfahrens voneinander verschiedene Werte aufweisen. Auch ist es möglich, dass im Rahmen des Basisverfahrens die Art des Reglers und/oder dessen Reglerparameter fest vorgegeben sind, während sie im Rahmen des Ermittlungsverfahrens vom Benutzer einstellbar sind. Auch andere Variationen sind möglich.

Alternativ oder zusätzlich ist es möglich, dass die Art des Basissollwertes B* im Rahmen des Basisverfahrens eine andere ist als im Rahmen des Ermittlungsverfahrens. Beispielsweise ist es möglich, dass im Rahmen des Basisverfahrens der Basissollwert B* stets ein Lagesollwert ist, während im Rahmen des Ermittlungsverfahrens der Basissollwert B* stets ein Drehzahlsollwert ist oder vom Benutzer einstellbar ist, ob es sich um einen Lagesollwert, einen Drehzahlsollwert oder einen Momentsollwert handelt.

Zur Ermittlung der Steuersignale C1 bis C6 bei gegebenem Stromsollwert I* wird oftmals eine Lage x einer beweglichen Komponente der elektrischen Maschine 5 berücksichtigt, beispielsweise bei einer rotatorischen elektrischen Maschine eine Drehstellung des Rotors. Hierbei ist es prinzipiell möglich, die Drehstellung des Rotors bzw. allgemein die Lage x der beweglichen Komponente mittels eines entsprechenden Lagegebers 14 als Messwert zu erfassen und der Steuerelektronik 9 zur Verfügung zu stellen. Alternativ ist es möglich (und Fachleuten allgemein bekannt) die Drehstellung des Rotors bzw. allgemein die Lage x der beweglichen Komponente geberlos zu ermitteln. Es ist - alternativ oder zusätzlich zu den oben genannten Ausgestaltungen - möglich, dass bei der Ermittlung der Steuersignale C1 bis C6 gemäß dem Ermittlungsverfahren die Lage x mittels des Lagegebers 14 erfasst und an die Steuerelektronik 9 übermittelt wird, während sie beim Basisverfahren von der Steuerelektronik 9 geberlos ermittelt wird.

Alternativ oder zusätzlich ist es möglich, dass die Steuerelektronik 9 bei der Ermittlung des Stromsollwertes I* und/ oder der Ermittlung der Steuersignale C1 bis C6 Sensorsignale T1, T2 aus der Umgebung des Frequenzumrichters 4 und/oder aus der Umgebung der elektrischen Maschine 5 berücksichtigt. In diesem Fall ist es möglich, dass die Art und Weise der Berücksichtigung im Rahmen des Basisverfahrens eine andere ist als im Rahmen des Ermittlungsverfahrens. Beispielsweise können mittels entsprechender Sensoren 15, 16 eine Temperatur T1 in der Umgebung des Frequenzumrichters 4 und/oder eine Temperatur T2 in der Umgebung der elektrischen Maschine 5 erfasst und dem Frequenzumrichter 4 zugeführt werden. Im Rahmen des Ermittlungsverfahrens kann parametriert werden, ob die Steuerelektronik 9 bei Überschreiten von Grenzwerten durch die Temperaturen T1, T2 die Leistungshalbleiter 9 weiterhin ansteuert oder ob sie die Ansteuerung einstellt. Im Rahmen des Betriebsverfahrens kann fest voreingestellt sein, dass die Steuerelektronik 9 bei Überschreiten der Grenzwerte durch die Temperaturen T1, T2 die Ansteuerung der Leistungshalbleiter 9 einstellt.

Alternativ oder zusätzlich ist es möglich, dass im Rahmen des Basisverfahrens die Ermittlung des Stromsollwertes I* und/ oder der Steuersignale C1 bis C6 derart erfolgt, dass eine der elektrischen Maschine 5 zugeführte Leistung auf einen relativ niedrigen Wert von beispielsweise 3 kW begrenzt wird, während im Rahmen des Ermittlungsverfahrens die Ermittlung des Stromsollwertes I* und/oder der Steuersignale C1 bis C6 derart erfolgt, dass die der elektrischen Maschine 5 zugeführte Leistung auf einen höheren Wert von beispielsweise 10 kW begrenzt wird.

Zur Ausführung des Ermittlungsverfahrens müssen der Steuerelektronik 9 gewisse Algorithmen A und/oder Parameter P zur Verfügung stehen. Zum Zeitpunkt der Ausführung des Ermittlungsverfahrens müssen daher entsprechend der Darstellung in FIG 2 sowohl die Algorithmen A und/oder die Parameter P in der Steuerelektronik 9 gespeichert sein. Es ist möglich, dass die Algorithmen A und/oder Parameter P in der Steuerelektronik 9 permanent gespeichert sind. In diesem Fall erfolgt die Freischaltung des Ermittlungsverfahrens durch das Entgegennehmen des Freischaltcodes NC durch die Steuerelektronik 9. Dies ist in FIG 2 dadurch angedeutet, dass es möglich ist, ausschließlich den Freischaltcode NC an die Steuereinrichtung 9 zu übermitteln. Alternativ ist es möglich, dass die Algorithmen A und/oder Parameter P in der Steuerelektronik 9 nur temporär gespeichert sind. In diesem Fall erfolgt die Freischaltung des Ermittlungsverfahrens dadurch, dass nicht nur der Freischaltcode NC, sondern zusammen mit dem Freischaltcode NC auch die erforderlichen Algorithmen A und/oder Parameter P an die Steuerelektronik 9 übermittelt werden. Dies ist in FIG 2 dadurch angedeutet, dass der Freischaltcode NC, die Algorithmen A und/oder die Parameter P zusammen an die Steuerelektronik 9 übermittelt werden.

Zusammengefasst betrifft die vorliegende Erfindung somit folgenden Sachverhalt:
Eine Steuerelektronik 9 eines Frequenzumrichters 4 nimmt wiederholt jeweils einen Basissollwert B* für den Betrieb einer über den Frequenzumrichter 4 mit elektrischer Energie versorgten elektrischen Maschine 5 entgegen, ermittelt unter Verwendung des jeweiligen Basissollwertes B* einen jeweiligen Stromsollwert I* und ermittelt unter Verwendung des jeweiligen Stromsollwertes I* jeweilige Steuersignale C1 bis C6 für Leistungshalbleiter 6 des Frequenzumrichters 4. Sie steuert die Leistungshalbleiter 6 entsprechend der ermittelten jeweiligen Steuersignale C1 bis C6 an und versorgt dadurch die elektrische Maschine 5 derart mit elektrischer Energie, dass die elektrische Maschine 5 so weit wie möglich entsprechend dem Basissollwert B* betrieben wird. Die Steuerelektronik 9 ermittelt den jeweiligen Stromsollwert I* und/oder die jeweiligen Steuersignale C1 bis C6 gemäß einem freigeschalteten Ermittlungsverfahren, wenn und solange ein zulässiger Nutzungsumfang N für das freigeschaltete Ermittlungsverfahren größer als 0 ist. Sobald hingegen der zulässige Nutzungsumfang N für das freigeschaltete Ermittlungsverfahren auf 0 absinkt, ermittelt die Steuerelektronik 9 den jeweiligen Stromsollwert I* und/oder die jeweiligen Steuersignale C1 bis C6 nicht mehr gemäß dem freigeschalteten Ermittlungsverfahren. Zumindest von Zeit zu Zeit reduziert die Steuerelektronik 9 den zulässigen Nutzungsumfang N für das freigeschaltete Ermittlungsverfahren.

Die vorliegende Erfindung weist viele Vorteile auf. Für den Hersteller des Frequenzumrichters 4 verringert sich die Typenvielfalt und vereinfacht sich demzufolge insbesondere die Logistik. Für den Nutzer des Frequenzumrichters 4 ergibt sich ein Gewinn an Flexibilität. Dies ist insbesondere dann von Bedeutung, wenn sich die Anforderungen an den Frequenzumrichter 4 nachträglich ändern. Dadurch kann der Benutzer weiterhin beispielsweise zunächst eine erste Funktionalität anfordern und zu einem späteren Zeitpunkt - sei es zusätzlich zur ersten Funktionalität, sei es alternativ zur ersten Funktionalität - eine zweiten Funktionalität anfordern. Selbst verständlich ist dies auch bei mehr als zwei Funktionalitäten möglich.

## Patentansprüche

1. Betriebsverfahren für einen Frequenzumrichter (4),
- wobei eine Steuerelektronik (9) des Frequenzumrichters (4) wiederholt jeweils einen Basissollwert (B*) für den Betrieb einer über den Frequenzumrichter (4) mit elektrischer Energie versorgten elektrischen Maschine (5) entgegennimmt, unter Verwendung des jeweiligen Basissollwertes (B*) einen jeweiligen Stromsollwert (I*) ermittelt, unter Verwendung des jeweiligen Stromsollwertes (I*) jeweilige Steuersignale (C1 bis C6) für Leistungshalbleiter (6) des Frequenzumrichters (4) ermittelt und die Leistungshalbleiter (6) entsprechend der ermittelten jeweiligen Steuersignale (C1 bis C6) ansteuert und dadurch die elektrische Maschine (5) derart mit elektrischer Energie versorgt, dass die elektrische Maschine (5) so weit wie möglich entsprechend dem Basissollwert (B*) betrieben wird,
- wobei die Steuerelektronik (9) den jeweiligen Stromsollwert (I*) und/oder die jeweiligen Steuersignale (C1 bis C6) gemäß einem freigeschalteten Ermittlungsverfahren ermittelt, wenn und solange ein zulässiger Nutzungsumfang (N) für das freigeschaltete Ermittlungsverfahren größer als 0 ist,
- wobei die Steuerelektronik (9) den jeweiligen Stromsollwert (I*) und/oder die jeweiligen Steuersignale (C1 bis C6) nicht mehr gemäß dem freigeschalteten Ermittlungsverfahren ermittelt, sobald der zulässige Nutzungsumfang (N) für das freigeschaltete Ermittlungsverfahren auf 0 absinkt, und
- wobei die Steuerelektronik (9) zumindest von Zeit zu Zeit den zulässigen Nutzungsumfang (N) für das freigeschaltete Ermittlungsverfahren reduziert.

2. Betriebsverfahren nach Anspruch 1, wobei die Steuerelektronik (9) immer dann, wenn der zulässige Nutzungsumfang (N) einen unteren Grenzwert (min) oberhalb von 0 erreicht, einen entsprechenden Hinweis ausgibt.

3. Betriebsverfahren nach Anspruch 1, wobei die Steuerelektronik (9) immer dann, wenn der zulässige Nutzungsumfang (N) einen unteren Grenzwert (min) oberhalb von 0 erreicht, prüft, ob sie zu einem eigenständigen Abrufen einer Erweiterung des zulässigen Nutzungsumfangs (N) berechtigt ist, bejahendenfalls die Erweiterung des zulässigen Nutzungsumfangs (N) über eine Rechner-Rechner-Verbindung (12) von einem Server (13) abruft und verneinendenfalls einen entsprechenden Hinweis ausgibt.

4. Betriebsverfahren nach Anspruch 1, 2 oder 3, wobei die Steuerelektronik (9) immer dann, wenn der zulässige Nutzungsumfang (N) für das freigeschaltete Ermittlungsverfahren auf 0 absinkt, den jeweiligen Stromsollwert (I*) und die jeweiligen Steuersignale (C1 bis C6) überhaupt nicht mehr ermittelt.

5. Betriebsverfahren nach Anspruch 1, 2 oder 3, wobei die Steuerelektronik (9) immer dann, wenn der zulässige Nutzungsumfang (N) für das freigeschaltete Ermittlungsverfahren auf 0 absinkt, zwar weiterhin den jeweiligen Stromsollwert (I*) und die jeweiligen Steuersignale (C1 bis C6) ermittelt, den jeweiligen Stromsollwert (I*) und/oder die jeweiligen Steuersignale (C1 bis C6) jedoch gemäß einem von dem freigeschalteten Ermittlungsverfahren verschiedenen Basisverfahren ermittelt.

6. Betriebsverfahren nach Anspruch 5, wobei das Basisverfahren sich von dem freigeschalteten Ermittlungsverfahren durch mindestens eine der folgenden Eigenschaften unterscheidet:
- eine Taktzeit (T'), mit welcher das Basisverfahren ausgeführt wird, ist größer als eine Taktzeit (T), mit welcher das freigeschaltete Ermittlungsverfahren ausgeführt wird;
- die Steuerelektronik (9) nimmt im Rahmen des freigeschalteten Ermittlungsverfahrens zusätzlich zum jeweiligen Basissollwert (B*) auch jeweils einen Basisistwert (B) entgegen und berücksichtigt ihn bei der Ermittlung des jeweiligen Stromsollwertes (I*), nimmt den jeweiligen Basisistwert (B) im Rahmen des Basisverfahrens jedoch nicht entgegen oder berücksichtigt ihn im Rahmen des Basisverfahrens nicht bei der Ermittlung des jeweiligen Stromsollwertes (I*);
- eine Sprungantwort, mit welcher die Steuerelektronik (9) bei der Ermittlung der Stromsollwerte (I*) auf eine Änderung von Basissollwert (B*) zu Basissollwert (B*) reagiert, ist bei dem Basisverfahren anders als bei dem freigeschalteten Ermittlungsverfahren;
- die Art des Basissollwertes (B*) ist im Rahmen des Basisverfahrens eine andere als im Rahmen des freigeschalteten Ermittlungsverfahrens;
- bei der Ermittlung der jeweiligen Steuersignale (C1 bis C6) wird eine Lage (x) einer beweglichen Komponente der elektrischen Maschine (5) berücksichtigt und bei der Ermittlung der Steuersignale (C1 bis C6) gemäß dem freigeschalteten Ermittlungsverfahren wird die Lage (x) mittels eines Lagegebers (14) erfasst und an die Steuerelektronik (9) übermittelt, während sie beim Basisverfahren von der Steuerelektronik (9) geberlos ermittelt wird;
- die Steuerelektronik (9) berücksichtigt bei der Ermittlung des jeweiligen Stromsollwertes (I*) und/oder der Ermittlung der jeweiligen Steuersignale (C1 bis C6) Sensorsignale (T1, T2) aus der Umgebung des Frequenzumrichters (4) und/oder aus der Umgebung der elektrischen Maschine (5) und die Steuerelektronik (9) berücksichtigt die Sensorsignale (T1, T2) im Rahmen des Basisverfahrens auf andere Weise als im Rahmen des freigeschalteten Ermittlungsverfahrens;
- die Steuerelektronik (9) ermittelt den jeweiligen Stromsollwert (I*) und/oder die jeweiligen Steuersignale (C1 bis C6) im Rahmen des Basisverfahrens und des freigeschalteten Ermittlungsverfahrens derart, dass eine der elektrischen Maschine (5) zugeführte Leistung im Rahmen des Basisverfahrens auf einen niedrigeren Wert begrenzt wird als im Rahmen des freigeschalteten Ermittlungsverfahrens.

7. Betriebsverfahren nach einem der Ansprüche 1 bis 6, wobei für die Ausführung des freigeschalteten Ermittlungsverfahrens erforderliche Algorithmen (A) und/oder Parameter (P) in der Steuerelektronik (9) permanent gespeichert sind und dass die Freischaltung des Ermittlungsverfahrens durch das Entgegennehmen eines Freischaltcodes (NC) durch die Steuerelektronik (9) erfolgt oder dass die Freischaltung des Ermittlungsverfahrens dadurch erfolgt, dass die Steuerelektronik (9) die für die Ausführung des freigeschalteten Ermittlungsverfahrens erforderlichen Algorithmen (A) und/oder Parameter (P) zusammen mit einem Freischaltcode (NC) entgegennimmt.

8. Betriebsverfahren nach Anspruch 7, wobei Eigenschaften des Ermittlungsverfahrens zu vorkonfektionierten Gruppen zusammengefasst sind, die mittels eines einheitlichen Freischaltcodes freigeschaltet werden.

9. Betriebsverfahren nach Anspruch 8, wobei die vorkonfektionierten Gruppen mittels einer App definiert sind, so dass ein Benutzer durch direktes Anwählen der App oder Auswählen innerhalb App die jeweilige Gruppe festlegen kann.

10. Betriebsverfahren nach Anspruch 7, 8 oder 9, wobei der Freischaltcode der Steuereinrichtung in einer App übermittelt wird.

11. Betriebsverfahren nach einem der Ansprüche 7 bis 10, wobei im Falle eines Ladens auch der Algorithmen und/oder Parameter die Algorithmen und/oder Parameter über einen Cloudrechner geladen werden.

12. Steuerprogramm für eine Steuerelektronik (9) eines Frequenzumrichters (4), wobei das Steuerprogramm Maschinencode (11) umfasst, der von der Steuerelektronik (9) abarbeitbar ist, wobei die Abarbeitung des Maschinencodes (11) durch die Steuerelektronik (9) bewirkt, dass die Steuerelektronik (9) ein Betriebsverfahren nach einem der obigen Ansprüche ausführt.

13. Steuerelektronik eines Frequenzumrichters (4), wobei die Steuerelektronik mit einem Steuerprogramm (10) nach Anspruch 12 programmiert ist, so dass die Abarbeitung des Maschinencodes (11) durch die Steuerelektronik bewirkt, dass die Steuerelektronik ein Betriebsverfahren nach einem der Ansprüche 1 bis 11 ausführt.

14. Frequenzumrichter, wobei der Frequenzumrichter Leistungshalbleiter (6) aufweist, über welche eine elektrische Maschine (5) mit elektrischer Energie versorgt wird, wobei der Frequenzumrichter eine Steuerelektronik (9) nach Anspruch 13 aufweist, welche dazu eingerichtet ist, die Leistungshalbleiter (6) anzusteuern.

## Claims

1. Operating method for a frequency converter (4),
- wherein an electronic control system (9) of the frequency converter (4) repeatedly receives one nominal base value (B*) at a time for the operation of an electric machine (5) supplied with electrical energy by means of the frequency converter (4), determines a respective nominal current value (I*) using the respective nominal base value (B*), determines respective control signals (C1 to C6) for power semiconductors (6) of the frequency converter (4) using the respective nominal base value (B*) and actuates the power semiconductors (6) according to the determined respective control signals (C1 to C6) and as a result supplies the electric machine (5) with electrical energy so that the electric machine (5) is operated as much as possible according to the nominal base value (B*),
- wherein the electronic control system (9) determines the respective nominal current value (I*) and/or the respective control signals (C1 to C6) according to an enabled determination method if and as long as a permissible extent of use (N) for the enabled determination method is greater than 0,
- wherein the electronic control system (9) no longer determines the respective nominal current value (I*) and/or the respective control signals (C1 to C6) according to the enabled determination method, as soon as the permissible extent of use (N) for the enabled determination method falls to 0, and
- wherein at least from time to time the electronic control system (9) reduces the permissible extent of use (N) for the enabled determination method.

2. Operating method according to claim 1, wherein the electronic control system (9) always outputs a corresponding notification when the permissible extent of use (N) reaches a lower limit value (min) above 0.

3. Operating method according to claim 1, wherein the electronic control system (9) always checks, when the permissible extent of use (N) reaches a lower limit value (min) above 0, whether it is authorised to independently retrieve an expansion of the permissible extent of use (N), in case of affirmation retrieves the expansion of the permissible extent of use (N) from a server (13) via a computer-computer link (12) and if not outputs a corresponding notification.

4. Operating method according to claim 1, 2 or 3, wherein the electronic control system (9) actually no longer determines the respective nominal current value (I*) and the respective control signals (C1 to C6) whenever the permissible extent of use (N) for the enabled nominal current value (I*) falls to 0.

5. Operating method according to claim 1, 2 or 3, wherein whenever the permissible extent of use (N) for the enabled determination method falls to 0, although the electronic control system (9) continues to determine the respective nominal current value (I*) and the respective control signals (C1 to C6), it determines the respective nominal current value (I*) and/or the respective control signals (C1 to C6) according to a basic method which differs from the enabled determination method.

6. Operating method according to claim 5, wherein the basic method differs from the enabled determination method by at least one of the following properties:
- a clock cycle (T'), with which the basic method is carried out, is greater than a clock cycle (T) with which the enabled determination method is carried out;
- within the scope of the enabled determination method, the electronic control system (9) receives, in addition to the respective nominal base value (B*), in each case also an actual base value (B) and considers it when the respective nominal current value (I*) is determined, does not receive the respective actual base value (B) within the scope of the basic method however or does not consider it within the scope of the basic method when the respective nominal current value (I*) is determined;
- a step response, with which the electronic control system (9) responds to a change from nominal base value (B*) to nominal base value (B*) when the nominal current values (I*) are determined, is different in the basic method than in the enabled determination method;
- the type of nominal base value (B*) is different within the scope of the basic method to within the scope of the enabled determination method;
- when the respective control signals (C1 to C6) are determined, a position (x) of a movable component of the electric machine (5) is considered and when the control signals (C1 to C6) are determined according to the enabled determination method, the position (x) is detected by means of a position encoder (14) and transmitted to the electronic control system (9), while in the basic method it is determined without an encoder by the electronic control system (9);
- when the respective nominal current value (I*) and/or the of the respective control signals (C1 to C6) are determined, the electronic control system (9) considers sensor signals (T1, T2) from the surroundings of the frequency converter (4) and/or from the surroundings of the electric machine (5) and the electronic control system (9) considers the sensor signals (T1, T2) within the scope of the basic method in a different way to within the scope of the enabled determination method;
- the electronic control system (9) determines the respective nominal current value (I*) and/or the respective control signals (C1 to C6) within the scope of the basic method and the enabled determination method so that within the scope of the basic method a power supplied to one of the electric machine (5) is limited to a lower value than within the scope of the enabled determination method.

7. Operating method according to one of claims 1 to 6, wherein algorithms (A) and/or parameters (P) required to carry out the enabled determination method are stored permanently in the electronic control system (9) and the determination method is enabled by the electronic control system (9) accepting an enable code (NC) or the determination method is enabled by the electronic control system (9) accepting the algorithms (A) and/or parameters (P) required to carry out the enabled determination method together with an enable code (NC).

8. Operating method according to claim 7, wherein properties of the determination method are combined to form prefabricated groups which are enabled by means of a uniform enable code.

9. Operating method according to claim 8, wherein the prefabricated groups are defined by means of an app, so that a user is able to set the respective group by directly selecting the app or selecting within the app.

10. Operating method according to claim 7, 8 or 9, wherein the enable code of the control device is transmitted in an app.

11. Operating method according to one of claims 7 to 10, wherein in the case of loading also the algorithms and/or parameters, the algorithms and/or parameters are loaded by way of a cloud computer.

12. Control program for an electronic control system (9) of a frequency converter (4), wherein the control program comprises machine code (11) which can be processed by the electronic control system (9), wherein the processing of the machine code (11) by the electronic control system (9) causes the electronic control system (9) to carry out an operating method according to one of the above claims.

13. Electronic control system of a frequency converter (4), wherein the electronic control system is programmed with a control program (10) according to claim 12, so that the processing of the machine code (11) by the electronic control system causes the electronic control system to carry out an operating method according to one of claims 1 to 11.

14. Frequency converter, wherein the frequency converter has power semiconductors (6), by way of which an electric machine (5) is supplied with electrical energy, wherein the frequency converter has an electronic control system (9) according to claim 13, which is designed to actuate the power semiconductors (6).

## Revendications

1. Procédé pour faire fonctionner un convertisseur (4) de fréquence,
- dans lequel un électronique (9) de commande du convertisseur (4) de fréquence reçoit, de manière répétée, respectivement une valeur (B*) consigne de base pour le fonctionnement d'une machine (5) électrique par l'intermédiaire du convertisseur (4) de fréquence, en utilisant la valeur (B*) respective de consigne de base détermine une valeur (I*) respective de consigne de courant, en utilisant la valeur (I*) respective de consigne de courant détermine des signaux (C1 à C6) respectifs de commande de semiconducteurs (6) de puissance du convertisseur (4) de fréquence, et commande les semiconducteurs (6) de puissance conformément aux signaux (C1 à C6) respectifs de commande, qui ont été déterminés et alimente ainsi la machine (5) électrique en énergie électrique, de manière à faire fonctionner la machine (5) électrique autant que possible conformément à la valeur (B*) de consigne de base,
- dans lequel l'électronique (9) de commande détermine la valeur (I*) respective de consigne de courant et/ou les signaux (C1 à C6) respectifs de commande suivant un procédé de détermination en circuit ouvert, si et tant que l'étendue (N) d'utilisation admissible du procédé de détermination en circuit ouvert est plus grande que 0,
- dans lequel l'électronique (9) de commande ne détermine plus, suivant le procédé de détermination en circuit ouvert, la valeur (I*) respective de consigne de courant et/ou les signaux (C1 à C6) respectifs de commande, dès que l'étendue (N) d'utilisation admissible du procédé de détermination en circuit ouvert s'abaisse à 0, et
- dans lequel l'électronique (9) de commande réduit, au moins de temps à autre, l'étendue (N) d'utilisation admissible du procédé de détermination en circuit ouvert.

2. Procédé suivant la revendication 1, dans lequel l'électronique (9) de commande donne toujours une indication correspondante, lorsque l'étendue (N) d'utilisation admissible atteint une valeur (min) limite inférieure au-dessus de 0.

3. Procédé suivant la revendication 1, dans lequel l'électronique (9) de commande contrôle toujours, lorsque l'étendue (N) d'utilisation admissible atteint une valeur (min) limite inférieure au-dessus de 0, si elle est autorisée à appeler, de manière autonome, un élargissement de l'étendue (N) d'utilisation admissible, dans l'affirmative, elle appelle, par un serveur (13), l'élargissement de l'étendue (N) d'utilisation admissible, par l'intermédiaire d'une liaison (12) d'ordinateur - ordinateur et, dans la négative, elle donne une indication correspondante.

4. Procédé suivant la revendication 1, 2 ou 3, dans lequel l'électronique (9) de commande ne détermine toujours absolument plus la valeur (I*) respective de consigne de courant et les signaux (C1 à C6) respectifs de commande, si l'étendue (N) d'utilisation admissible du procédé de détermination en circuit ouvert s'abaisse à 0.

5. Procédé suivant la revendication 1, 2 ou 3, dans lequel l'électronique (9) de commande continue certes toujours à déterminer la valeur (I*) respective de courant de consigne et des signaux (C1 à C6) respectifs de commande, lorsque l'étendue (N) d'utilisation admissible du procédé de détermination en circuit ouvert s'abaisse à 0, mais détermine la valeur (I*) respective de courant de consigne ou les signaux (C1 à C6) respectifs de commande suivant un procédé de base différent du procédé de détermination en circuit ouvert.

6. Procédé suivant la revendication 5, dans lequel le procédé de base se distingue du procédé de détermination en circuit ouvert, par au moins l'une des propriétés suivantes :
- un temps (T') de cycle, avec lequel le procédé de base est effectué est plus grand qu'un temps (T) de cycle, avec lequel le procédé de détermination en circuit ouvert est effectué ;
- l'électronique (9) de commande reçoit, dans le cadre du procédé de détermination en circuit ouvert, en plus de la valeur (B*) respective de consigne de base, également respectivement une valeur (B) réelle de base et en tient compte dans la détermination de la valeur (I*) respective de consigne de courant, ne reçoit pas la valeur (B) respective réelle de base dans le cadre du procédé de base ou n'en tient pas compte dans le cadre du procédé de base lors de la détermination de la valeur (I*) respective de consigne de courant ;
- une réponse à saut, par laquelle l'électronique (9) de commande réagit, lors de la détermination des valeurs (I*) de consigne de courant, à une modification d'une valeur (B*) de consigne de base à une valeur (B*) de consigne est, dans le procédé de base, autre que dans le procédé de détermination en circuit ouvert ;
- le type de la valeur (B*) de consigne de base est, dans le cadre du procédé de base, autre que dans le cadre du procédé de détermination en circuit ouvert ;
- lors de la détermination des signaux (C1 à C6) respectifs de commande, on tient compte d'une position (x) d'un composant mobile de la machine (5) électrique et, lors de la détermination des signaux (C1 à C6) de commande suivant le procédé de détermination en circuit ouvert, on détecte la position (x) au moyen d'un capteur (14) de position et on la transmet à l'électronique (9) de commande, tandis qu'elle est déterminée sans capteur par l'électronique (9) de commande lors du procédé de base ;
- l'électronique (9) de commande prend en compte, lors de la détermination de la valeur (I*) respective de consigne de courant et/ou de la détermination des signaux (C1 à C6) respectifs de commande, des signaux (T1, T2) de capteur de l'environnement du convertisseur (4) de fréquence et/ou de l'environnement de la machine (5) électrique et l'électronique (9) de commande prend en compte les signaux (T1, T2) de capteur, dans le cadre du procédé de base d'une autre façon que dans le cadre du procédé de détermination en circuit ouvert ;
- l'électronique (9) de commande détermine la valeur (I*) respective de consigne de courant et/ou les signaux (C1 à C6) respectifs de commande, dans le cadre du procédé de base et du procédé de détermination en circuit ouvert, de manière à limiter une puissance apportée à la machine (5) électrique, dans le cadre du procédé de base, à une valeur plus basse que dans le cadre du procédé de détermination en circuit ouvert.

7. Procédé suivant l'une des revendications 1 à 6, dans lequel des algorithmes (A) et/ou des paramètres (P), nécessaires à la réalisation du procédé de détermination en circuit ouvert, sont mis en mémoire de manière permanente dans l'électronique (9) de commande, et en ce que la validation du procédé de détermination s'effectue par la réception d'un code (NC) de validation par l'électronique (9) de commande ou en ce que la validation du procédé de détermination s'effectue par le fait que l'électronique (9) de commande reçoit les algorithmes (A) et/ou les paramètres (P) nécessaires pour la réalisation du procédé de détermination en circuit ouvert, ensemble avec un code (NC) de validation.

8. Procédé suivant la revendication 7, dans lequel des propriétés du procédé de détermination sont rassemblés en des groupes pré-confectionnés, qui sont validés au moyen d'un code de validation unitaire.

9. Procédé suivant la revendication 8, dans lequel les groupes pré-confectionnés sont définis au moyen d'un applet, de manière à ce qu'un utilisateur puisse, par sélection directe de l'applet ou par sélection dans l'applet, fixer le groupe respectif.

10. Procédé suivant la revendication 7, 8 ou 9, dans lequel on transmet le code de validation du dispositif de commande dans un applet.

11. Procédé suivant l'une des revendications 7 à 10, dans lequel, dans le cas d'une charge, on charge également les algorithmes et/ou les paramètres par un ordinateur de nuage.

12. Programme de commande d'une électronique (9) de commande d'un convertisseur (4) de fréquence, dans lequel le programme de commande comprend un code machine (11), qui peut être élaboré par l'électronique (9) de commande, l'élaboration du code machine (11) par l'électronique (9) de commande faisant que l'électronique (9) de commande effectue un procédé suivant l'une des revendications précédentes.

13. Electronique de commande d'un convertisseur (4) de fréquence, l'électronique de commande étant programmée par un programme (10) de commande suivant la revendication 12, de manière à ce que l'élaboration du code machine (11) par l'électronique de commande fasse que l'électronique de commande effectue un procédé suivant l'une des revendications 1 à 11.

14. Convertisseur de fréquence, le convertisseur de fréquence ayant des semiconducteurs (6) de puissance, par lesquels une machine (5) électrique est alimentée en énergie électrique, le convertisseur de fréquence ayant une électronique (9) de commande suivant la revendication 13, qui est conçue pour commander les semiconducteurs (6) de puissance.
